# EUROPÄISCHE PATENTSCHRIFT

(11) **EP 1 046 518 B1**
(45) Veröffentlichungstag und Bekanntmachung des Hinweises auf die Patenterteilung: **03.09.2003**
(21) Anmeldenummer: 00107037.4
(22) Anmeldetag: 31.03.2000
(51) Int. Cl.: B44C 1/10, B60R 13/00

(54) **Selbstklebende Verkleidungsfolie**
Self-adhesive sheeting
Film autocollant

(30) Priorität: 23.04.1999 DE 29907231 U
(43) Veröffentlichungstag der Anmeldung: 25.10.2000
(73) Patentinhaber: CD-Design GmbH, 42653 Solingen (DE)
(72) Erfinder: Titze, Michael, 42781 Haan (DE)
(74) Vertreter: Patentanwälte Dr. Solf & Zapf

(56) Entgegenhaltungen:
- EP-A- 0 189 999
- WO-A-90/03311
- US-A- 3 607 540
- US-A- 5 747 738

## Beschreibung

Die Erfindung betrifft eine selbstklebende Verkleidungsfolie, insbesondere für Karosserieteile von Kraftfahrzeugen, bestehend aus einem Verklebungsabschnitt und einem an einem Ende des Verklebungsabschnitts beabstandet angeordneten Anlageabschnitt, mit jeweils im Verklebungsabschnitt und im Anlageabschnitt einer Dekorfolienlage, auf deren einer Seite eine selbstklebende Beschichtung aufgetragen ist, die durch eine abziehbare Abdeckfolienlage abgedeckt ist, wobei der im Bereich des Anlageabschnitts liegende Abschnitt der Abdeckfolienlage separat abziehbar ist.

Derartige Verkleidungsfolien werden beispielsweise zur Verkleidung von Karosserieteilen in der Kraftfahrzeugindustrie, insbesondere für A-, B- und C-Säulen im Außenbereich eines Kraftfahrzeuges, eingesetzt. Sie dienen dort zu einer ästhetisch ansprechenden und schützenden Gestaltung der Bauteiloberfläche. Die Folien werden mit einer an das zu verkleidende Bauteil angepaßten Form aus Folienbahnen ausgeschnitten, insbesondere ausgestanzt. Die Dekorfolienlage besteht dabei vornehmlich aus Kunststoff, insbesondere aus PVC.

In einer, der oben beschriebenen ähnlichen Ausführung einer Verkleidungsfolie ist an dem Ende des Verklebungsabschnitts kein Anlageabschnitt sondern seitlich eine Grifflasche angeordnet, die zum Halten der Folie dient, wenn die Dekorfolienlage von der Abdeckfolienlage abgezogen wird. Die Grifflasche ist dabei hinsichtlich ihrer Schichtung ebenso ausgebildet wie der Verklebungsabschnitt (Dekorfolienlage, selbstklebende Beschichtung, Abdeckfolienlage). Die Abdeckfolienlage ist im Bereich der Grifflasche einstückig mit dem übrigen Bereich der Abdeckfolienlage ausgebildet, während die Dekorfolienlage im Bereich der Grifflasche vom übrigen Bereich der Dekorfolienlage durch einen Schnitt getrennt ist. Mit dem Abdeckfolienbereich an der Grifflasche kann leicht ein Anfangspunkt für das Abziehen der Abdeckfolienlage gefunden werden. Nach einem teilweisen Abziehen der Abdeckfolienlage wird eine Oberkante der Dekorfolienlage mit der selbstklebenden Beschichtung an einem zu verkleidenden Karosserieteil, beispielsweise einer A-Säule eines Personenkraftwagens, oben angelegt und durch Kleben fixiert. Danach wird die Abdeckfolienlage vollständig abgezogen und die Dekorfolienlage vollständig am Karosserieteil festgeklebt. Ein Nachteil dieser Verkleidungsfolie besteht dabei darin, daß die Abdeckfolienlage von Hand abgehoben bzw. die Dekorfolienlage ohne Abdeckfolienlage gehandhabt werden muß, wobei insbesondere beim Anlegen und Fixieren der Dekorfolienlage die Gefahr besteht, daß die selbstklebende Beschichtung berührt wird, wodurch sich die Klebequalität der Folie an dieser Stelle verschlechtern kann.

Um dies zu vermeiden, ist in einer bekannten Ausführung einer Verkleidungsfolie der oben beschriebenen Art an einem Ende des Verklebungsaabschnitts der Anlageabschnitt angeordnet, welcher zum Halten, Anlegen und anfänglichen Fixieren der Folie dient. Der Anlageabschnitt ist dabei wiederum hinsichtlich seiner Schichtung ebenso ausgebildet wie die übrige Folie, d.h. wie der Verklebungsabschnitt (Dekorfolienlage, selbstklebende Beschichtung, Abdeckfolienlage). Nach einem teilweisen separaten Abziehen der Abdeckfolienlage vom Anlageabschnitt wird die Dekorfolienlage des Anlageabschnittes mit der selbstklebenden Beschichtung oberhalb eines zu verkleidenden Karosserieteils angelegt und durch Kleben fixiert. Danach wird die Abdeckfolienlage von der übrigen Verkleidungsfolie (Verklebungsabschnitt) abgezogen und die Dekorfolienlage vollständig am Karosserieteil festgeklebt. Eine Notwendigkeit bei dieser bekannten Verkleidungsfolie besteht dabei darin, daß der Anlageabschnitt vom Verklebungsabschnitt der Folie vollständig getrennt sein muß und im Sinne einer optimalen Handhabbarkeit der Folie zusätzlich auch geringfügig beabstandet sein sollte. Einerseits muß also die Abdeckfolienlage im Bereich des Anlageabschnittes vom übrigen Bereich der Abdeckfolienlage getrennt sein, damit sie separat abgezogen werden kann, andererseits muß auch die Dekorfolienlage im Bereich des Anlageabschnittes vom übrigen Bereich der Dekorfolienlage getrennt sein, da der Anlageabschnitt nach dem Verkleben der Folie entfernt wird. Um gleichzeitig diese vollständige Trennung und Beabstandung des Anlageabschnittes vom Verklebungsabschnitt sowie aber auch eine Verbindung des Anlageabschnittes mit der übrigen Folie zu gewährleisten, ist der Anlageabschnitt durch eine zusätzliche Schutzfolie mit dem übrigen Folienbereich verbunden. Bei dieser Schutzfolie, die auch als "application tape" bezeichnet wird, handelt es sich beispielsweise um eine Papierfolienlage, auf deren einer Seite eine selbstklebende Beschichtung aufgetragen ist, mit welcher die Schutzfolie auf die Dekorfolienlage der Verkleidungsfolie (Anlageabschnitt und Verklebungsabschnitt) geklebt ist. Der Zwischenraum zwischen den jeweils aus Dekorfolienlage, selbstklebender Beschichtung und Abdeckfolienlage aufgebauten Folienteilen im Verklebungs- und im Anlageabschnitt wird so nur durch die Schutzfolie überbrückt und Anlageabschnitt und Verklebungsabschnitt über die Schutzfolien zusammengehalten. Nachdem die Dekorfolienlage des Anlageabschnittes mit der selbstklebenden Beschichtung oberhalb des zu verkleidenden Karosserieteils angelegt und fixiert ist, und die Abdeckfolienlage abgezogen und die Dekorfolie verklebt wird, wird somit die gesamte Verkleidungsfolie über die Schutzfolie gehalten. Die Schutzfolie wird abschließend (nach dem Verkleben der Dekorfolie) entfernt. Obwohl diese bekannte Verkleidungsfolie vorteilhafterweise durch die Schutzfolie einen ausgezeichneten Schutz für die Oberfläche der Dekorfolie bietet, besitzt sie den Nachteil, daß sie in der Herstellung vergleichsweise aufwendig ist und daß nach dem Verkleben etwa doppelt soviel Abfall (Schutzfolie und Abdeckfolienlage) verbleibt, wie dies bei der vorbeschriebenen Verkleidungsfolie der Fall ist. Zudem hat es sich auch gezeigt, daß nachteiligerweise oftmals die Klebeverbindung zwischen Schutzfolie und Dekorfolienlage nicht - wie erforderlich - stärker ist als die Klebeverbindung zwischen Dekorfolienlage und Abdeckfolienlage, so daß sich die Schutzfolie bereits vorzeitig (beim Abziehen der Abdeckfolienlage) löst.

Der vorliegenden Erfindung liegt die Aufgabe zugrunde, eine Verkleidungsfolie der eingangs beschriebenen Art zu schaffen, die einerseits langandauernd ohne Klebefehler haltbar, leicht verarbeitbar und andererseits in wenig aufwendiger Weise herstellbar und umweltfreundlich in der Verwendung ist.

Erfindungsgemäß wird dies dadurch erreicht, daß der Anlageabschnitt mit dem Verklebungsabschnitt über einen zwischen dem Anlageabschnitt und dem Verklebungsabschnitt angeordneten, aus der Dekorfolienlage gebildeten Brückenabschnitt verbunden ist, wobei der Brückenabschnitt über eine Perforationslinie mit dem Verklebungsabschnitt in Verbindung steht.

Erfindungsgemäß kann somit zum einen auf den Einsatz eines "application tape" verzichtet werden, wodurch der Herstellungsaufwand der Verkleidungsfolie vergleichsweise gering bleibt und die Entstehung von größeren Abfallmengen vermieden werden kann. Zum anderen ist jedoch auch ein fehlerfreies Verkleben der Verkleidungsfolie in einfacher und sicherer Weise möglich, da durch den aus der Dekorfolienlage gebildeten Brückenabschnitt eine beabstandete Verbindung des einfach, z.B. an einem Karosserieteil im Dachbereich eines Pkw, vorfixierbaren Anlageabschnittes mit dem Verklebungsabschnitt gewährleistet ist. Aufgrund der Perforation zwischen dem Brückenabschnitt und dem Verklebungsabschnitt ist der Brückenabschnitt mitsamt dem Anlageabschnitt nach dem Verkleben des Verklebungsabschnitts auch einfach zu entfernen.

Sehr vorteilhaft bei der erfindungsgemäßen Verkleidungsfolie ist es auch, daß der im Bereich des Anlageabschnitts liegende, separat abziehbare Abschnitt der Abdeckfolienlage von dem im Verklebungsbereich liegenden Abschnitt der Abdeckfolienlage durch eine Schnittlinie getrennt werden kann, die außerhalb des Verklebungsabschnitts, insbesondere an der Grenze zwischen dem Brückenabschnitt und dem Anlageabschnitt, verläuft. Auf diese Weise kann mit Sicherheit (Die Toleranzbreite ist dabei insbesondere durch die Breite des Brückenabschnitts bestimmt.) vermieden werden, daß beim entsprechenden Durchtrennen der Abdeckfolienlage zur Herstellung der Folie sich Stanzmesserkonturen in den im Bereich des Verklebungsabschnitts liegenden Teil der Dekorfolienlage eindrücken könnten, was aus ästhetischen Gründen unbedingt vermieden werden sollte.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung näher erläutert werden. Dabei zeigen:
- Fig. 1: eine selbstklebende erfindungsgemäße Verkleidungsfolie in einer Draufsicht,
- Fig. 2: eine erfindungsgemäße Verkleidungsfolie schematisiert im Schnitt.

In den verschiedenen Figuren der Zeichnung sind dieselben Teile stets auch mit denselben Bezugszeichen versehen, so daß sie in der Regel auch jeweils nur einmal beschrieben werden. Die einzelnen Lagen bzw. Schichten der erfindungsgemäßen Folie sind dabei mit Ziffern bezeichnet, die einzelnen Abschnitte bzw. Bereiche mit Buchstaben. Je nachdem, in welchem Abschnitt oder Bereich sich eine Lage bzw. Schicht befindet, erhält diese zusätzlich zu ihrer Bezugsziffer den entsprchenden Bezugsbuchstaben des Abschnitts oder Bereichs.

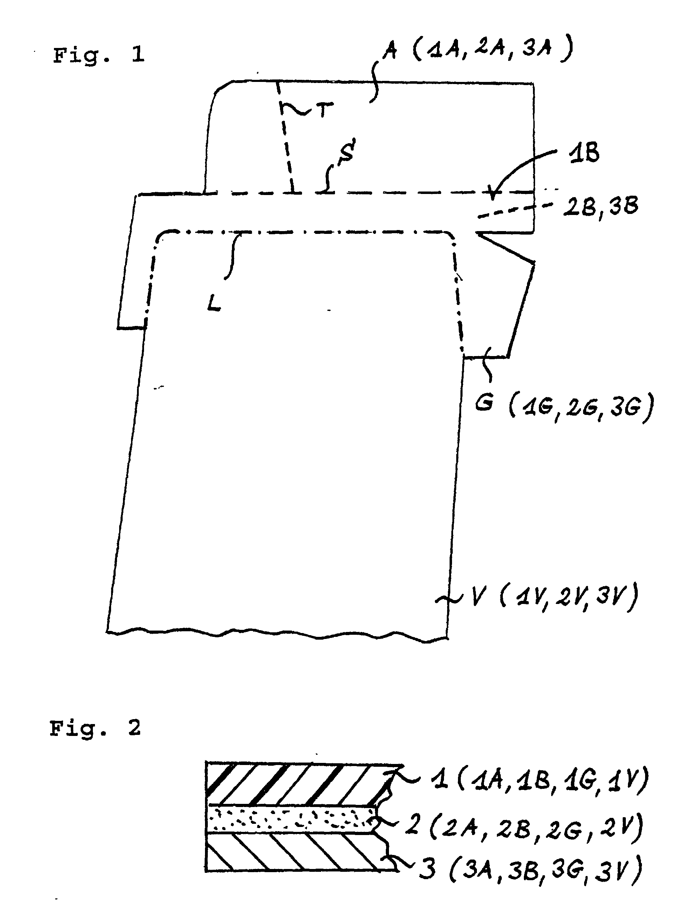

Wie aus Fig. 1 hervorgeht, besteht eine selbstklebende Verkleidungsfolie, die insbesondere zur Verkleidung von Karosserieteilen von Kraftfahrzeugen zur Anwendung kommen kann, aus einem Verklebungsabschnitt V und einem an einem Ende des Verklebungsabschnitts V beabstandet angeordneten Anlageabschnitt A.

Fig. 2 zeigt, daß die Folie jeweils im Verklebungsabschnitt V und im Anlageabschnitt A eine Dekorfolienlage 1 aufweist, auf deren einer Seite eine selbstklebende Beschichtung 2 aufgetragen ist, welche wiederum durch eine abziehbare Abdeckfolienlage 3 abgedeckt ist.

Die Dekorfolienlage 1 kann mit Vorteil aus Kunststoff, insbesondere aus einer PVC- oder einer Polyolefinfolie, bestehen.

Die abziehbare Abdeckfolienlage 3 kann mit Vorteil ebenfalls aus Papier, das mit einer antiadhäsiven Beschichtung versehen ist, oder auch aus Kunststoff bestehen.

Die Verkleidungsfolie ist nach der Art eines Klebebandes ausgebildet, d.h. die Dekorfolienlage 1 ist auf ihrer Unterseite mit der Klebebeschichtung 2 versehen, bei der es sich insbesondere um einen druckempfindlichen Haftkleber handeln kann. Auf diese Weise kann die erfindungsgemäße Dekorfolienlage leicht auf eine zu verzkleidende Oberfläche, beispielsweise auf der A-Säule eines Pkw, aufgeklebt werden.

Fig. 1 zeigt des weiteren, daß der Anlageabschnitt A mit dem Verklebungsabschnitt V über einen zwischen dem Anlageabschnitt A und dem Verklebungsabschnitt V angeordneten, aus der Dekorfolienlage 1 gebildeten Brückenabschnitt 1B verbunden ist, wobei der Brückenabschnitt 1B über eine strichpunktiert gezeichnete Perforationslinie L mit dem Verklebungsabschnitt V in Verbindung steht.

Die Perforationslinie L kann dabei mit Vorteil durch eine Mikroperforation in der Dekorfolienlage 1 gebildet sein, was auch nach einem vollständigen Durchtrennen der Perforation und einem Entfernen des Brückenabschnittess 1B ein ansprechendes Äußeres der Kante des Verklebungsabschnitts V gewährleistet.

Insbesondere kann die Perforationslinie L z.B. durch alternierende etwa 0,2 mm lange Schlitze und etwa 0,15 mm lange Dekorfolienabschnitte gebildet sein.

Weiterhin veranschaulicht Fig. 1, daß es besonders zweckmäßig im Sinne der Ausbildung hoher Haltekräfte zwischen dem Brückenabschnitt 1B und dem Verklebungsabschnitt V sein kann, wenn der Brückenabschnitt 1B den Verklebungsabschnitt V auch teilweise seitlich umfaßt.

Am Brückenabschnitt 1B kann dabei des weiteren mit Vorteil seitlich des Verklebungsabschnittes V ein Grifflaschenbereich G ausgebildet sein, wobei zum Abziehen der Abdeckfolienlage 3 diese in einem im Grifflaschenbereich G liegenden Abschnitt 3G erfaßt werden kann.

Der im Bereich des Anlageabschnitts A liegende Abschnitt 3A (vgl. Fig. 1) der Abdeckfolienlage 3 ist separat abziehbar. Wie bereits erwähnt, ist es von besonderem Vorteil, wenn dieser im Bereich des Anlageabschnitts A liegende, separat abziehbare Abschnitt 3A der Abdeckfolienlage 3 von dem im Verklebungsbereich V liegenden Abschnitt 3V der Abdeckfolienlage 3 durch eine Schnittlinie S (in Fig. 1 als Strichlinie gezeichnet) getrennt ist, die außerhalb des Verklebungsabschnitts V, insbesondere an der Grenze zwischen dem Brückenabschnitt 1B und dem Anlageabschnitt A, verläuft. Bei der Herstellung des Schnittes S kann so die Dekorfolienlage 1 im für die Verkleidung funktionell wichtigen Bereich weder zerstört noch ästhetisch ungewollt beeinflußt werden.

Unterseitig des Brückenabschnitts 1B (Dekorfolienlage 1) kann ebenfalls ein Abschnitt 2B mit selbstklebender Beschichtung 2 und ein Abschnitt 3B der Abdeckfolienlage 3 befinden, die jedoch nicht zum Zusammenhalt von Anlageabschnitt A un Verklebungsabschnitt beitragen.

Zum Verkleben der erfindungsgemäßen Verkleidungsfolie wird zunächst die Abdeckfolienlage 3 im Bereich 3A des Anlageabschnittes A abgezogen. Die Dekorfolienlage 1 im Bereich 1A des Anlageabschnittes A wird mit der selbstklebenden Beschichtung 2 (Bereich 2A) oberhalb eines zu verkleidenden Karosserieteils angelegt und durch Kleben fixiert. Danach wird die Abdeckfolienlage 3 von der übrigen Verkleidungsfolie (Verklebungsabschnitt V, Bereich 3V) abgezogen und der entsprechende Bereich 1V der Dekorfolienlage 1 vollständig mittels der Klebeschicht (Bereich 2V) am Karosserieteil festgeklebt. Beim Verkleben wird dabei die gesamte Verkleidungsfolie über den Brückenabschnitt 1B gehalten. Die Folie ist dabei ausgezeichnet handhabbar und eine Berührung der selbstklebenden Beschichtung 2 im Bereich 2V des Verklebungsabschnittes V ist dabei wirksam ausgeschlossen. Zum Abziehen der Abdeckfolienlage 3 beim Verkleben kann diese vorteilhafterweise in ihrem Bereich 3G des Grifflaschenbereiches G erfaßt werden. Abschließend (nach dem Verkleben der Dekorfolie) wird der Anlageabschnitt A (bzw. der verklebte Teil 1A der Dekorfolienlage 1) an der Perforationslinie L - ggf. einschließlich der Dekorfolienlage 1 und der Klebeschicht 2 (im Bereich 1G bzw. 2G) des Grifflaschenbereiches G - gelöst und vollständig entfernt. Es verbleibt nur ein geringer Abfall.

Wie bereits aus den vorstehenden Erkläuterungen hervorgeht, ist die Erfindung nicht auf das beschriebene Ausführungsbeispiel beschränkt, sondern umfaßt auch alle im Sinne der Ansprüche gleichwirkenden Ausführungen. Beispielsweise kann zusätzlich - wie Fig. 1 zeigt - eine weitere Schnittlinie T in der Abdeckfolienlage 3 im Anlagebereich vorgesehen sein, die quer zur Schnittlinie S verläuft und damit den Bereich 3A nochmals unterteilt. Dadurch ist ein leichteres Ablösen der Abdeckfolienlage möglich.

### Bezugszeichen

- 1: Dekorfolienlage
- 1A: Dekorfolienlage im Bereich von A
- 1B: Brückenabschnitt
- 1G: Dekorfolienlage im Bereich von G
- 1V: Dekorfolienlage im Bereich von V
- 2: Klebebeschichtung auf 1
- 2A: Klebebeschichtung im Bereich von A
- 2B: Klebebeschichtung unter 1B
- 2G: Dekorfolienlage im Bereich von G
- 3V: Klebebeschichtung im Bereich von V
- 3: Abdeckfolienlage
- 3A: Abdeckfolienlage im Bereich von A
- 3B: Abdeckfolienlage unter 1B
- 3G: Abdeckfolienlage im Bereich von G
- 3V: Abdeckfolienlage im Bereich von V

- A: Anlageabschnitt
- G: Grifflaschenbereich
- L: Perforationslinie zwischen 1B und V
- V: Verklebungsbereich
- S: Schnittlinie
- T: Schnittlinie

## Patentansprüche

1. Selbstklebende Verkleidungsfolie, insbesondere für Karosserieteile von Kraftfahrzeugen, bestehend aus einem Verklebungsabschnitt (V) und einem an einem Ende des Verklebungsabschnitts (V) beabstandet angeordneten Anlageabschnitt (A), mit jeweils im Verklebungsabschnitt (V) und im Anlageabschnitt (A) einer Dekorfolienlage (1), auf deren einer Seite eine selbstklebende Beschichtung (2) aufgetragen ist, die durch eine abziehbare Abdeckfolienlage (3) abgedeckt ist, wobei der im Bereich des Anlageabschnitts (A) liegende Abschnitt (3A) der Abdeckfolienlage (3) separat abziehbar ist,
**dadurch gekennzeichnet, daß** der Anlageabschnitt (A) mit dem Verklebungsabschnitt (V) über einen zwischen dem Anlageabschnitt (A) und dem Verklebungsabschnitt (V) angeordneten, aus der Dekorfolienlage (1) gebildeten Brückenabschnitt (1B) verbunden ist, wobei der Brückenabschnitt (1B) über eine Perforationslinie (L) mit dem Verklebungsabschnitt (V) in Verbindung steht.

2. Verkleidungsfolie nach Anspruch 1,
**dadurch gekennzeichnet, daß** die Perforationslinie (L) durch eine Mikroperforation in der Dekorfolienlage (1) gebildet ist.

3. Verkleidungsfolie nach Anspruch 1 oder 2,
**dadurch gekennzeichnet, daß** die Perforationslinie (L) durch alternierende etwa 0,2 mm lange Schlitze und etwa 0,15 mm lange Dekorfolienabschnitte gebildet ist.

4. Verkleidungsfolie nach einem oder mehreren der Ansprüche 1 bis 3,
**dadurch gekennzeichnet, daß** der Brückenabschnitt (1B) den Verklebungsabschnitt (V) teilweise seitlich umfaßt.

5. Verkleidungsfolie nach Anspruch 4,
**dadurch gekennzeichnet, daß** am Brückenabschnitt (1B) seitlich des Verklebungsabschnittes (V) ein Grifflaschenbereich (G) ausgebildet ist.

6. Verkleidungsfolie nach einem oder mehreren der Ansprüche 1 bis 4,
**dadurch gekennzeichnet, daß** der im Bereich des Anlageabschnitts (A) liegende, separat abziehbare Abschnitt (3A) der Abdeckfolienlage (3) von dem im Verklebungsbereich (V) liegenden Abschnitt (3V) der Abdeckfolienlage (3) durch eine Schnittlinie (S) getrennt ist, die außerhalb des Verklebungsabschnitts (V), insbesondere an der Grenze zwischen dem Brückenabschnitt und (1B) dem Anlageabschnitt (A), verläuft.

## Claims

1. Self-adhesive trim film, in particular for body parts of motor vehicles, consisting of an adhesive section (V) and a contact section (A) arranged at a distance at one end of the adhesive section (V), with, in each of the adhesive section (V) and the contact section (A), a decorative film layer (1) to one side of which is applied a self-adhesive coating (2) which is covered by a pull-off cover film layer (3), wherein the section (3A) of the cover film layer (3) located in the region of the contact section (A) can be pulled off separately, **characterised in that** the contact section (A) is joined to the adhesive section (V) by a bridge section (1B) arranged between the contact section (A) and the adhesive section (V) and formed from the decorative film layer (1), wherein the bridge section (1B) is joined to the adhesive section (V) by a perforation line (L).

2. Trim film according to claim 1, **characterised in that** the perforation line (L) is formed by a microperforation in the decorative film layer (1).

3. Trim film according to claim 1 or 2, **characterised in that** the perforation line (L) is formed by alternating slots about 0.2 mm long and decorative film sections about 0.15 mm long.

4. Trim film according to one or more of claims 1 to 3, **characterised in that** the bridge section (1B) partially laterally encompasses the adhesive section (V).

5. Trim film according to claim 4, **characterised in that** on the bridge section (1B) laterally of the adhesive section (V) is formed a gripping tab region (G).

6. Trim film according to one or more of claims 1 to 4, **characterised in that** the section (3A) of the cover film layer (3) which is located in the region of the contact section (A) and can be pulled off separately is separated from the section (3V) of the cover film layer (3) located in the adhesive region (V) by a cutting line (S) which runs outside the adhesive section (V), in particular at the boundary between the bridge section (1B) and the contact section (A).

## Revendications

1. Feuille de revêtement autoadhésive, en particulier pour des pièces de carrosserie de véhicules automobiles, comprenant une partie de collage (V) et une partie de contact (A) disposée à distance à une extrémité de la partie de collage (V), avec, dans la partie de collage (V) et dans la partie de contact (A), une couche de film décorative (1) sur l'une des faces de laquelle est appliquée une enduction autoadhésive (2) qui est recouverte par une couche de feuille de recouvrement (3) pouvant être enlevée, la partie (3A) de la couche de film de recouvrement (3) située dans la zone de la partie de contact (A) pouvant être retirée séparément, **caractérisée en ce que** la partie de contact (A) est reliée à la partie de collage (V) par l'intermédiaire d'une partie formant pont (1B) constituée de la couche de feuille décorative (1), disposée entre la partie de contact (A) et la partie de collage (V), la partie formant pont (1B) étant reliée à la partie de collage (V) par l'intermédiaire d'une ligne de perforation (L).

2. Feuille de revêtement selon la revendication 1, **caractérisée en ce que** la ligne de perforation (L) est formée par une micro-perforation dans la couche de feuille décorative (1).

3. Feuille de revêtement selon la revendication 1 ou 2, **caractérisée en ce que** la ligne de perforation (L) est formée par des fentes d'environ 0,2 mm de longueur alternant avec des segments de feuille décorative d'environ 0,15 mm de long.

4. Feuille de revêtement selon une ou plusieurs des revendications 1 à 3, **caractérisée en ce que** la partie formant pont (1B) entoure partiellement la partie de collage (V) latéralement.

5. Feuille de revêtement selon la revendication 4, **caractérisée en ce qu'**une zone de patte de manutention (G) est formée sur la partie de pont (1B,) latéralement à la partie de collage (V).

6. Feuille de revêtement selon l'une ou plusieurs des revendications 1 à 4, **caractérisée en ce que** la partie (3A) de la couche de feuille de recouvrement (3), ladite partie pouvant être retirée séparément, située dans la zone de la partie de contact (A), est séparée de la partie (3V) de la couche de feuille de recouvrement (3), ladite partie étant située dans la zone de collage (V) par une ligne de coupe (S) qui s'étend à l'extérieur de la partie de collage (V), en particulier à la limite entre la partie formant pont (1B) et la partie de contact (A).
